(19) **Europäisches Patentamt / European Patent Office / Office européen des brevets**

(11) **EP 2 286 339 B1**

(12) **FASCICULE DE BREVET EUROPEEN**

(45) Date de publication et mention
de la délivrance du brevet:
**26.09.2018 Bulletin 2018/39**

(51) Int Cl.:
*G06F 11/36* $^{(2006.01)}$

(21) Numéro de dépôt: **09761378.0**

(86) Numéro de dépôt international:
**PCT/EP2009/003566**

(22) Date de dépôt: **19.05.2009**

(87) Numéro de publication internationale:
**WO 2009/149815 (17.12.2009 Gazette 2009/51)**

(54) **PROCÉDÉ D'ÉLABORATION AUTOMATIQUE DE CAS DE TEST POUR LA VÉRIFICATION D'AU MOINS UNE PARTIE D'UN LOGICIEL**

VERFAHREN ZUR AUTOMATISCHEN FORMULIERUNG VON TESTFÄLLEN ZUR ÜBERPRÜFUNG MINDESTENS EINES TEILS EINER SOFTWAREEINHEIT

METHOD OF AUTOMATICALLY FORMULATING TEST CASES FOR VERIFYING AT LEAST ONE PART OF A PIECE OF SOFTWARE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **19.05.2008 DE 102008024170**

(43) Date de publication de la demande:
**23.02.2011 Bulletin 2011/08**

(73) Titulaire: **Johnson Controls Technology Company
Milwaukee, WI 53209 (US)**

(72) Inventeurs:
• **AWEDIKIAN, Roy**
**F-75014 Paris (FR)**
• **YANNOU, Bernard**
**F-91460 Marcoussis (FR)**
• **LEBRETON, Philippe**
**F-44150 Ancenis (FR)**
• **BOUCLIER, Line**
**F-95300 Pontoise (FR)**
• **MEKHILEF, Mounib**
**F-18220 Soulagnis (FR)**

(74) Mandataire: **Lavialle, Bruno François Stéphane et al
Cabinet Boettcher
16, rue Médéric
75017 Paris (FR)**

(56) Documents cités:
**WO-A-2006/007588     US-A1- 2004 154 001
US-B1- 6 189 116**

• **BRINGMANN E ET AL: "Model-Based Testing of Automotive Systems" 9 avril 2008 (2008-04-09), SOFTWARE TESTING, VERIFICATION, AND VALIDATION, 008 INTERNATIONAL CONFERENCE ON, IEEE, PISCATAWAY, NJ, USA, PAGE(S) 485 - 493 , XP031270179 ISBN: 978-0-7695-3127-4 page 488, alinéa 3.6**
• **PROWELL S J: "A cost-benefit stopping criterion for statistical testing" 5 janvier 2004 (2004-01-05), SYSTEM SCIENCES, 2004. PROCEEDINGS OF THE 37TH ANNUAL HAWAII INTERNATI ONAL CONFERENCE ON 5-8 JAN. 2004, PISCATAWAY, NJ, USA,IEEE, PAGE(S) 304 - 309 , XP010682844 ISBN: 978-0-7695-2056-8 le document en entier**
• **TRAMMELL CARMEN: "Quantifying the reliability of software: statistical testing based on a usage model" SOFTWARE ENGINEERING STANDARDS SYMPOSIUM, 1995. (ISESS'95) 'EXPERIENCE AND PRACTICE', PROCEEDINGS., SECOND IEEE INTERNATIONAL, 21 août 1995 (1995-08-21), pages 208-218, XP002545149 Montreal (CA)**

## Description

L'invention concerne un procédé pour la conception de cas de test pour un test fonctionnel d'un produit logiciel.

Depuis quelques années, l'électronique prend une place prépondérante dans la conception des véhicules automobiles. Les architectures électroniques des automobiles deviennent ainsi de plus en plus complexes et les constructeurs d'automobiles sous-traitent la conception des modules électroniques à des fournisseurs d'électronique automobile. Ces modules électroniques comprennent généralement un calculateur exécutant un logiciel et une grande part des défauts constatés sur ces modules sont des défauts du logiciel.

La découverte précoce d'un défaut dans le cycle de développement d'un logiciel et la réduction des défauts découverts par le constructeur d'automobiles ou par l'utilisateur du véhicule est un objectif prioritaire des sous-traitants de l'automobile.

Il est jusqu'à présent d'usage que les ingénieurs de test logiciel conçoivent manuellement les cas de test logiciel sur la base de leurs connaissances individuelles, de sorte que la qualité des cas de test dépend au bout du compte de l'expérience de chaque ingénieur de test logiciel.

La demande internationale WO2006/007588 divulgue une méthode pour générer des cas de tests à partir d'un réseau d'automates stochastiques. La publication scientifique "Quantifying the reliability of software: statistical testing based on a usage model" divulgue une méthode pour générer des cas de tests en utilisant des chaînes de Markov.

L'invention a donc pour but d'automatiser l'élaboration des cas de test pour un test fonctionnel d'un logiciel, d'un composant ou d'un produit logiciel de manière qu'il soit possible, en éliminant l'inconvénient décrit ci-dessus, de détecter les défauts dans le logiciel avec une sécurité plus élevée par comparaison avec l'art antérieur.

A cet effet, on prévoit, selon l'invention, un procédé d'élaboration automatique par un ordinateur de cas de test pour vérifier au moins une fonctionnalité d'un logiciel au regard d'un cahier des charges comportant des spécifications mettant en relation des valeurs d'entrée et des valeurs de sortie du logiciel, le procédé comprenant les étapes de :

- distinguer les spécifications combinatoires et les spécifications séquentielles,
- modéliser les spécifications combinatoires par exemple par une table de vérité et les spécifications séquentielles par exemple par une machine à état fini pour obtenir un cahier des charges modélisé,
- établir une matrice opérationnelle mettant en relation les valeurs d'entrée du logiciel avec une probabilité de leur enchaînement et un temps de transition entre elles,
- sélectionner les enchaînements de valeurs d'entrée à tester en effectuant un tirage Monte-Carlo dans la matrice opérationnelle,
- déterminer un cas de test comportant des lignes de test mettant en relation chaque enchaînement sélectionné avec les valeurs de sorties attendues d'après le cahier des charges modélisé,
- arrêter la détermination lorsque le cas de test en cours de détermination permet d'atteindre un seuil prédéterminé pour au moins un des critères suivant : pourcentage de code de la fonctionnalité vérifié, pourcentage des spécifications vérifié, temps de vérification et coût de vérification.

Le traitement proposé des spécifications et l'élaboration de la matrice opérationnelle permet une mise en oeuvre automatique du procédé de l'invention par un traitement informatique avec un minimum d'intervention humaine. Il en résulte une augmentation des performances de détection des défauts, une diminution du temps nécessaire à la vérification de la fonctionnalité et une baisse corrélative du coût de celle-ci.

D'autres caractéristiques et avantages de l'invention ressortiront à la lecture de la description qui suit de modes de réalisation particuliers non limitatifs de l'invention.

Il sera fait référence aux dessins annexés, parmi lesquels :

- la figure 1 est un synoptique illustrant le principe de l'invention ;
- la figure 2 est un synoptique illustrant l'opération d'élaboration du cahier des charges modélisé ;
- la figure 3 est un synoptique montrant le principe de constitution d'une matrice opérationnelle conforme à l'invention ;
- les figures 4 et 5 sont des vues synoptiques montrant des matrices opérationnelles équiprobabilistes ;
- la figure 6 est une vue synoptique illustrant l'opération d'élaboration de la matrice opérationnelle liée au profil d'utilisateur ;
- la figure 7 est une vue synoptique illustrant l'opération d'élaboration de la matrice opérationnelle liée aux cas de test passés ;
- la figure 8 est une vue synoptique illustrant l'opération d'élaboration de la matrice opérationnelle liée aux défauts passés ;
- la figure 9 est une vue synoptique montrant le processus de détermination des cas de test ;

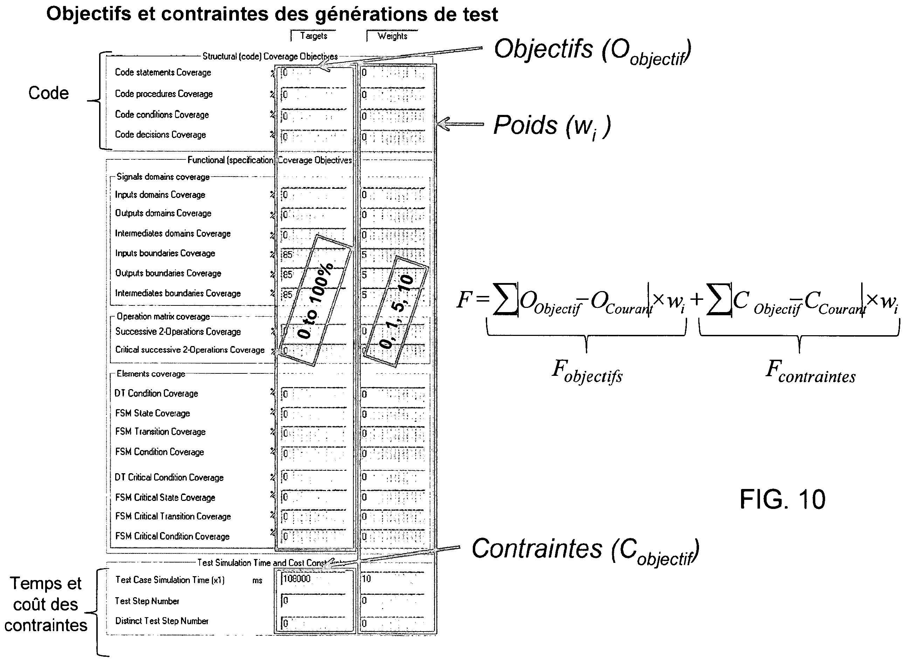

- la figure 10 est une vue synoptique illustrant les critères d'arrêt de la détermination des cas de test.

D'une manière générale, selon un aspect important, l'invention propose une approche intégrée pour générer des cas de test pour un test fonctionnel d'un composant ou d'un produit logiciel qui est en particulier destiné à être utilisé dans le domaine automobile.

Ce procédé permet l'élaboration automatique par un ordinateur de cas de test pour vérifier au moins une fonctionnalité du logiciel au regard d'un cahier des charges comportant des spécifications ou exigences mettant en relation des valeurs d'entrée et des valeurs de sortie du logiciel.

Dans une variante de réalisation, l'invention base l'approche sur une ou plusieurs des caractéristiques a) à g) ci-après :

a) un modèle pour représenter les exigences fonctionnelles d'un logiciel ;

b) un cadre d'applications pour la création d'un profil du conducteur ;

c) un cadre d'applications pour récupérer les défauts logiciels détectés par le passé et les cas de test relatifs aux projets précédents ;

d) un cadre d'application pour étendre le modèle de spécifications logicielles en utilisant des données statistiques relatives aux exigences critiques (commandes ou actions récurrentes de la part du conducteur, défauts logiciels récurrents et retour d'expérience) ;

e) une fonction objectif ou cible basée sur la qualité du logiciel (couverture structurelle et fonctionnelle) et sur les coûts des cas de test générés ;

f) un algorithme de test basé sur une simulation de Monte-Carlo sur les domaines d'entrée de la fonctionnalité en cours de vérification ; et

g) un algorithme d'optimisation heuristique pour optimiser la formule représentant la fonction objectif ou cible pendant la génération automatique des cas de test.

D'autres précisions concernant l'invention figurent dans les considérations ci-après 1) à 3) sur lesquelles sont basées l'approche intégrée et la plateforme informatique correspondante :

1.) Modélisation des spécifications logicielles : les modèles de spécifications logicielles courants sont chacun développés pour un contexte industriel ou académique donné. Dans l'industrie automobile, il n'existe pas de modèle unifié pour représenter les spécifications logicielles. Les constructeurs d'automobiles remettent à leurs fournisseurs différents formalismes, et les fournisseurs concernés doivent adapter leurs processus aux formalismes des constructeurs d'automobiles. Il est en conséquence proposé un modèle pour représenter les spécifications logicielles en tenant compte de l'application automobile et de ses limites. Dans les faits, chaque fonctionnalité logicielle présente un ensemble de signaux d'entrée, de signaux intermédiaires et de signaux de sortie. Les signaux sont reliés les uns aux autres par des éléments. Un élément est un ensemble d'exigences fonctionnelles de même type. Il est proposé au premier niveau deux types d'exigences fonctionnelles (de manière combinatoire ou séquentielle) qui peuvent être modélisés sur la base des deux types d'éléments de modélisation, à savoir une table de décisions (*Decision table,* DT) et un automate à état fini (*Finite state machine* FSM).

2.) Concentration sur les tests critiques à effectuer en raison de la probabilité élevée de découvrir un défaut logiciel (*bug*) : une analyse d'un ensemble de défauts logiciels qui avaient été découverts par des constructeurs d'automobiles ou des utilisateurs des véhicules a fait apparaître qu'il faut certaines commandes ou actions « orientées conducteur » pour mettre en lumière quelques-uns de ces défauts logiciels. Par ailleurs, l'utilisation de défauts logiciels détectés par le passé et de cas de test développés par le passé dans le domaine automobile est très avantageuse, étant donné que plus de la moitié des fonctionnalités assurées par un produit logiciel donné est commune à chaque série de véhicules. On propose donc deux cadres d'applications, un cadre d'applications pour modéliser le comportement du conducteur lors de l'utilisation d'une fonctionnalité logicielle spécifique, et un autre cadre d'applications pour réutiliser des données capitalisées par le passé pour une fonctionnalité donnée. On propose par ailleurs une structure pour superposer au modèle de spécifications quelques données statistiques qui concernent le profil comportemental du conducteur du véhicule et l'utilisation d'expériences relatives à la détection des défauts logiciels pour des produits similaires. Cette extension du modèle de spécifications permet à la poursuite de la génération de tests pertinents quant à leur probabilité de découvrir les défauts logiciels existants.

3.) Surveillance de la génération automatique des tests au moyen d'indicateurs de qualité : les tests de logiciels reposent souvent sur des hypothèses et des objectifs spécifiques, qui aident les ingénieurs de test à décider quand un protocole de test doit être terminé. Pour surveiller la génération des cas de test est proposée une fonction objectif qui est basée sur des indicateurs de qualité, tels que par exemple la couverture structurelle ou fonctionnelle formelle et les coûts des tests générés. On propose également une fenêtre d'interface qui permet au testeur logiciel de définir une prescription cible précise pour ces trois sous-ensembles d'indicateurs de qualité. En conséquence un algorithme d'optimisation heuristique vise, pendant la génération de cas de test par une simulation de Monte-Carlo sur le domaine d'entrée, à optimiser la fonction cible.

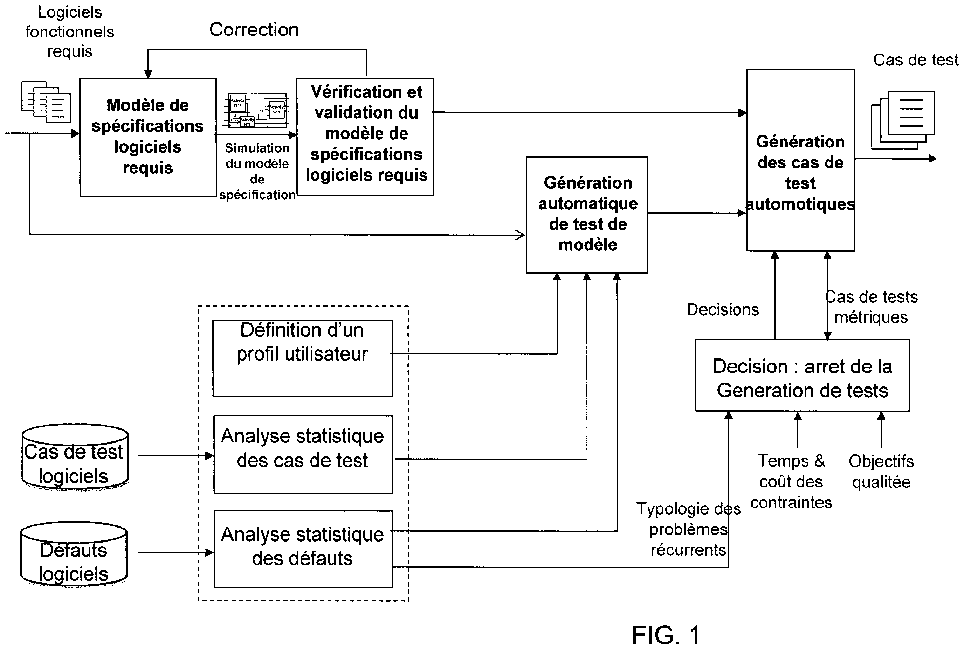

Selon un mode de réalisation particulier et en référence aux figures, le procédé de l'invention (dont le principe général apparaît figure 1) débute par une phase de modélisation du cahier des charges.

Le cahier des charges comporte des spécifications Req mettant en relation des valeurs d'entrée et des valeurs de sortie de la fonctionnalité du logiciel à vérifier. Il y a ici trois entrées I et deux sorties O, à savoir :

- I1 ayant comme valeurs possibles 0, 1 ;
- I2 ayant comme valeurs possibles 1, 2, 3 ;
- I3 ayant comme valeurs possibles 0, 1.

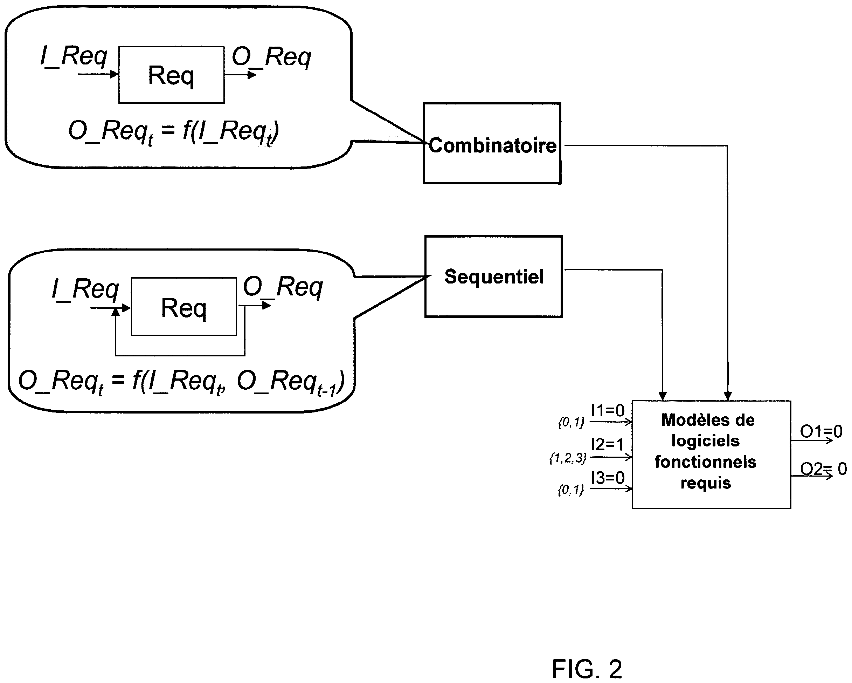

Cette phase comprend l'étape de distinguer dans le cahier des charges les spécifications combinatoires et les spécifications séquentielles (figure 2). Une spécification est combinatoire lorsqu'une sortie O dépend d'une entrée I : $O_{Req(t)} = f(I_{Req(t)})$. Une spécification est séquentielle lorsque, à un instant t, une sortie O dépend de l'entrée I à l'instant t et de la sortie O à un instant antérieur : $O_{Req(t)} = f(I_{Req(t)}, O_{Req(t-1)})$.

De façon automatique, les spécifications combinatoires sont ensuite modélisées par une table de vérité ou table de décision et les spécifications séquentielles sont modélisées par une machine à état fini (regroupant des états de départ, des états d'arrivée et entre ceux-ci des transitions éventuellement affectées de conditions). Ceci permet d'obtenir un cahier des charges modélisé des spécifications simulables. Le cahier des charges modélisé est ensuite de préférence testé et validé pour s'assurer qu'il correspond bien au cahier des charges initial.

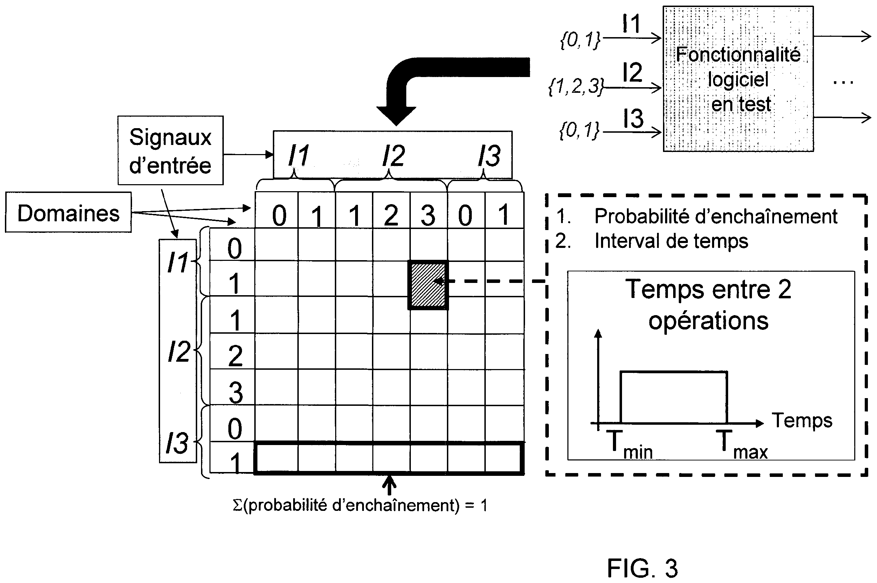

Il est ensuite établi une matrice opérationnelle mettant en relation les valeurs d'entrée du logiciel avec une probabilité de leur enchaînement et un temps de transition entre elles (voir la figure 3). La matrice opérationnelle comprend autant de lignes et de colonnes que de valeurs possibles (par exemple : 0, 1 ; 1, 2, 3) des entrées (I1, I2, I3), chaque ligne correspondant à une valeur d'entrée et chaque colonne correspondant également à une valeur d'entrée. Toutes les entrées et toutes leurs valeurs possibles sont représentées en lignes et en colonnes. Chaque intersection de ligne et de colonne contient une probabilité que la valeur d'entrée en colonne succède à la valeur d'entrée en ligne (la somme des probabilités pour une même ligne étant égale à 1) et un temps ou une plage de temps nécessaire pour que la valeur d'entrée en colonne succède à la valeur d'entrée en ligne. On parle d'enchaînement des valeurs d'entrée.

Cinq matrices opérationnelles sont ici conçues.

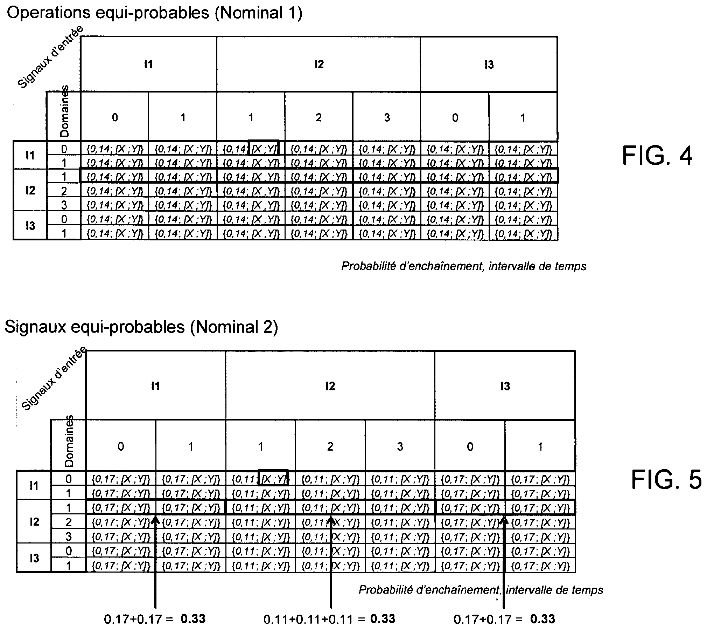

Dans la première matrice opérationnelle (figure 4), on considère qu'à une valeur d'entrée peut succéder avec la même probabilité n'importe quelle valeur d'entrée. Tous les enchaînements ont la même probabilité de survenir quelque soit les entrées.

Dans la deuxième matrice opérationnelle (figure 5), on considère qu'à une valeur d'entrée peut succéder avec la même probabilité n'importe quelle entrée. Tous les enchaînements ont la même probabilité de survenir au sein de chaque entrée succédant à une valeur d'entrée.

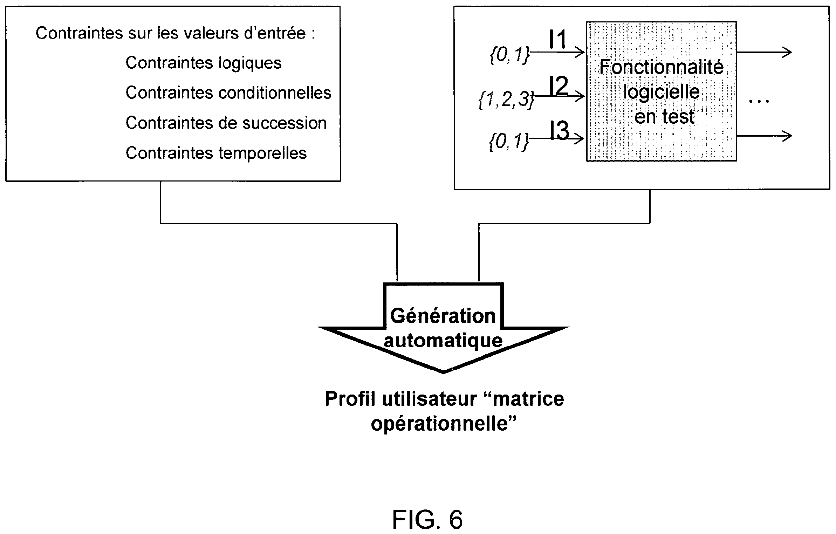

La troisième matrice opérationnelle (figure 6) est obtenue en déterminant un profil d'utilisateur de la fonctionnalité à vérifier, identifiant, pour chaque enchaînement de valeurs d'entrée, au moins l'un des types de contraintes suivantes s'exerçant sur l'enchaînement des valeurs d'entrée :

- contraintes logiques,
- contraintes conditionnelles,
- contraintes de succession,
- contraintes temporelles.

L'étude des contraintes logiques permet d'identifier les entrées cycliques ou acycliques : une entrée est cyclique lorsque pour lui affecter la valeur 3 il faut nécessairement lui affecter au préalable et successivement les valeurs 1 et 2. L'étude des contraintes conditionnelles permet d'identifier les valeurs d'entrées nécessaires pour qu'une entrée passe à une valeur prédéterminée : par exemple I1 ne peut être égale à 1 que si I2 est égale à 0. L'étude des contraintes de succession permet d'identifier des enchaînements obligatoires : par exemple I1 passe à 1, puis I2 passe à 2 et I3 passe à 0. Les contraintes temporelles permettent de déterminer un temps d'attente ou une plage de temps d'attente nécessaire pour qu'une valeur d'entrée succède à une autre. Ces différents enchaînements sont reportés dans la troisième matrice opérationnelle.

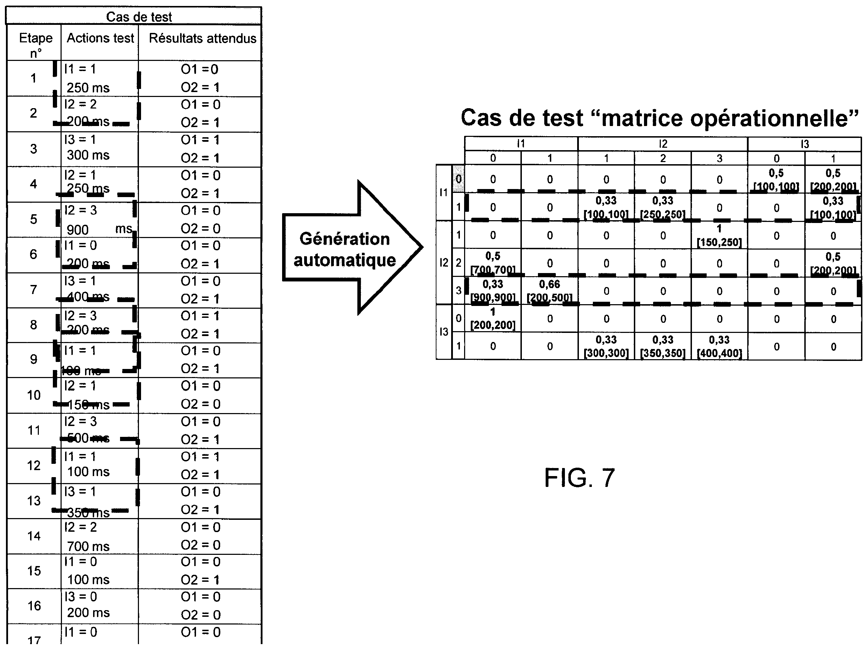

La quatrième matrice opérationnelle (figure 7) résulte d'une analyse statistique des données d'une base de données de cas de tests passés au regard de la fonctionnalité à vérifier. Cette analyse statistique est orientée pour identifier la fréquence de vérification de chaque enchaînement de valeurs d'entrée dans les cas de test passés. La base de données regroupe tous les cas de test effectués par le passé, classés éventuellement par fonctionnalité pour en faciliter la réutilisation. L'analyse statistique est centrée sur les cas de test concernant la même fonctionnalité que celle à vérifier. Cette base de données est par exemple mémorisée dans une feuille de tableur comme le tableur EXCEL de la société Microsoft. L'élaboration de la quatrième matrice opérationnelle et de l'analyse statistique est réalisée au moyen d'une macro-commande développée par exemple au moyen d'un langage de programmation de type VISUAL BASIC.

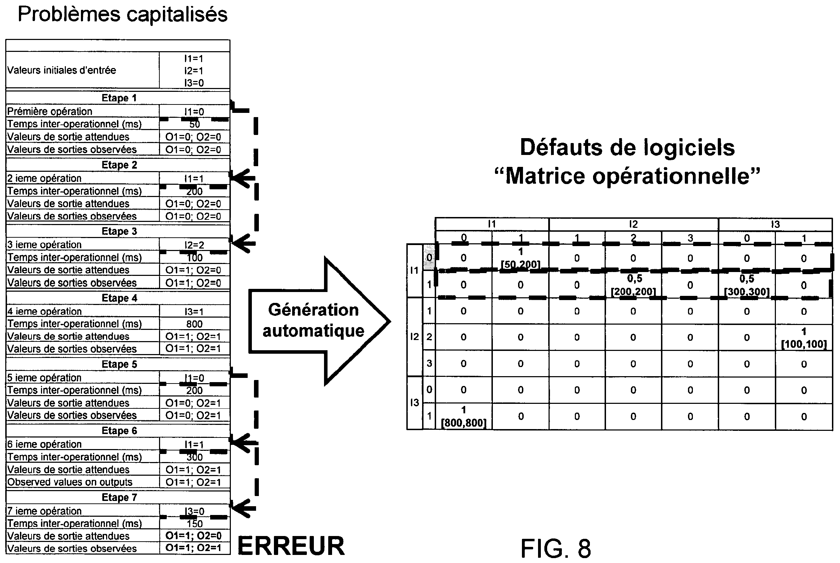

La cinquième matrice opérationnelle (figure 8) résulte d'une analyse statistique des données d'une base de données de défauts de logiciels au regard de la fonctionnalité à vérifier. Cette analyse statistique est orientée pour identifier la fréquence d'apparition des enchaînements de valeurs d'entrée dans un processus d'apparition des défauts connus de la fonctionnalité. La base de données regroupe tous les défauts recensés par le passé avec le processus (c'est-à-dire la succession de valeurs d'entrée avec le temps de transition) ayant conduit à leur apparition, classés éventuellement par fonctionnalité pour en faciliter la réutilisation et centrée l'analyse statistique sur les défauts concernant la même fonctionnalité que celle à vérifier. Cette base de données est par exemple mémorisée dans une feuille de tableur comme le tableur EXCEL de la société Microsoft. L'élaboration de la cinquième matrice opérationnelle et l'analyse statistique sont réalisées au moyen d'une macro-commande développée par exemple au moyen d'un langage de programmation de type VISUAL BASIC.

Les cinq matrices opérationnelles peuvent être combinées pour former une seule matrice opérationnelle ou être enregistrées ensemble pour que des enchaînements puissent être sélectionnés dans les cinq matrices opérationnelles.

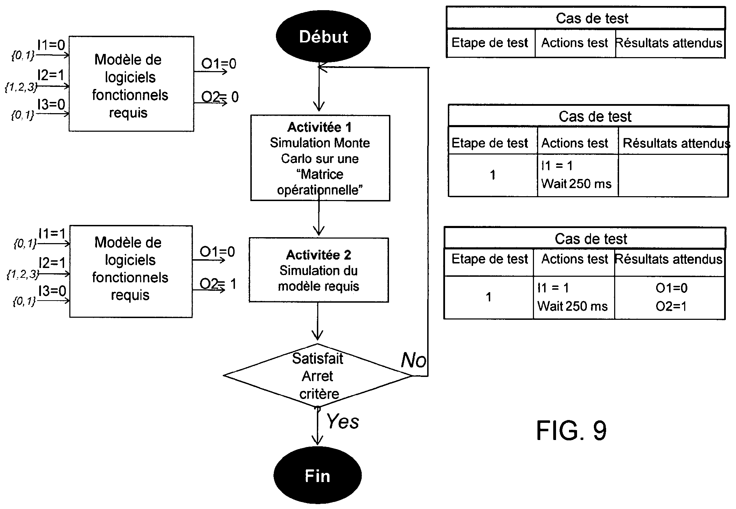

Le procédé comprend alors les étapes de sélectionner les enchaînements de valeurs d'entrée à tester en effectuant un tirage Monte-Carlo dans au moins une des matrices opérationnelles (ici dans les cinq matrices opérationnelles) et de déterminer un cas de test comportant des lignes de test mettant en relation chaque enchaînement sélectionné avec les valeurs de sorties attendues d'après le cahier des charges modélisé (figure 9).

La détermination est arrêtée lorsque le cas de test en cours de détermination permet d'atteindre un seuil prédéterminé pour au moins un des critères suivant : pourcentage de code de la fonctionnalité vérifié (couverture du code par la vérification), pourcentage des spécifications vérifié (couverture des spécifications par la vérification), temps de vérification et coût de vérification.

L'arrêt de la détermination du cas de test est déterminé à partir d'une formule (ou fonction objectif ou cible) faisant intervenir au moins une partie des critères assortis d'une pondération.

La formule est ici

$$F = \Sigma(O_{target} - O_{current}) \times W_i + \Sigma(C_{target} - C_{current}) \times W_i$$

Où $O_{target}$ le seuil de pourcentage (code et spécification) vérifié, $O_{current}$ est le pourcentage actuellement vérifié par le cas de test en cours de détermination, $C_{target}$ est le seuil de temps et de coût, $C_{current}$ est le temps nécessaire à la vérification en l'état actuel du cas de test et le coût actuel de la vérification, et $W_i$ est la pondération affectée respectivement aux pourcentages, au temps et au coût.

La figure 9 montre une interface permettant à l'opérateur d'entrée les seuils qu'il souhaite atteindre et la pondération affectée à ceux-ci en fonction de l'importance qu'il leur accorde.

L'arrêt de la détermination est précédé d'une étape de validation de chaque ligne de test au regard de cette formule, chaque étape de test étant retenue si elle entraîne une évolution favorable du résultat de la formule. Dans le cas contraire, cette ligne de test est écartée et une nouvelle ligne de test est élaborée. De la même manière, l'arrêt de la détermination est précédé d'une étape de validation de chaque ligne de test, dans laquelle il est vérifié si la valeur d'entrée testée a déjà été testée dans une ligne de test précédente. Ceci constitue un algorithme heuristique permettant d'optimiser la détermination du cas de test et la prise de décision quand à l'arrêt du test.

De préférence, le procédé comprend une étape de configuration permettant à un utilisateur de définir les seuils des critères d'arrêt de la détermination.

Lors de cette phase de configuration, l'opérateur peut en outre indiquer le nombre d'essais à envisager après l'abandon d'une ligne de test ou d'un enchaînement de manière à éviter que le programme tourne sans fin, sans parvenir à atteindre les seuils fixés.

Lorsque plusieurs configurations de départ de la fonctionnalité peuvent être envisagées pour un cas de test, l'étape de configuration du procédé peut être agencée pour permettre à l'opérateur de fixer le nombre de configurations de départ à prendre en compte.

L'ensemble du procédé de l'invention est mis en oeuvre par un programme informatique.

Bien entendu, l'invention n'est pas limitée aux modes de réalisations décrits mais englobe toute variante entrant dans le champ de l'invention telle que définie par les revendications.

En particulier, la matrice opérationnelle peut être réalisée à partir de matrices opérationnelles intermédiaires qui seront combinées pour former la matrice opérationnelle finale : par exemple cinq matrices opérationnelles correspondant à matrices opérationnelles détaillées ci-dessus. Bien entendu, le nombre de matrices opérationnelles intermédiaires peut être différent et il est possible de réaliser la matrice opérationnelle finale sans passer par une matrice opérationnelle intermédiaire. Il est aussi possible de rajouter une matrice opérationnelle intermédiaire ou non, totale ou partielle, élaborée par l'opérateur en fonction de son expérience et / ou de spécificités de la fonctionnalité.

L'arrêt de la détermination des cas de test peut être réalisé en fonction d'un ou plusieurs des critères cités ci-dessus ou avec en plus un ou plusieurs autres critères.

**Revendications**

1.  Procédé d'élaboration automatique par un ordinateur de cas de test pour vérifier au moins une fonctionnalité d'un logiciel au regard d'un cahier des charges comportant des spécifications mettant en relation des valeurs d'entrée et des valeurs de sortie du logiciel, le procédé comprenant les étapes de :

    - distinguer les spécifications combinatoires et les spécifications séquentielles,
    - modéliser les spécifications combinatoires par exemple par une table de vérité et les spécifications séquentielles par exemple par une machine à état fini pour obtenir un cahier des charges modélisé,
    - établir une matrice opérationnelle mettant en relation les valeurs d'entrée avec une probabilité de leur enchaînement et un temps de transition entre elles,
    - sélectionner les enchaînements de valeurs d'entrée à tester en effectuant un tirage Monte-Carlo dans la matrice opérationnelle,
    - déterminer un cas de test comportant des lignes de test mettant en relation chaque enchaînement sélectionné avec les valeurs de sorties attendues d'après le cahier des charges modélisé,
    - arrêter la détermination lorsque le cas de test en cours de détermination permet d'atteindre un seuil prédéterminé pour au moins un des critères suivant : pourcentage de code de la fonctionnalité vérifié, pourcentage des spécifications vérifié, temps de vérification et coût de vérification.

2.  Procédé selon la revendication 1, dans lequel l'établissement de la matrice opérationnelle comprend la phase d'effectuer une analyse statistique des données d'une base de données de défauts de logiciels au regard de la fonctionnalité à vérifier pour identifier la fréquence d'apparition des enchaînements de valeurs d'entrée dans un processus d'apparition des défauts connus de la fonctionnalité.

3.  Procédé selon la revendication 1, dans lequel l'établissement de la matrice opérationnelle comprend la phase d'effectuer une analyse statistique des données d'une base de données de cas de tests passés au regard de la fonctionnalité à vérifier pour identifier la fréquence de vérification de chaque enchaînement de valeurs d'entrée dans les cas de test passés.

4.  Procédé selon la revendication 1, dans lequel l'établissement de la matrice opérationnelle comprend la phase de déterminer un profil d'utilisateur de la fonctionnalité à vérifier identifiant, pour chaque enchaînement de valeurs d'entrée, au moins l'un des types de contraintes suivantes s'exerçant sur l'enchaînement des valeurs d'entrée :

    - contraintes logiques,
    - contraintes conditionnelles,
    - contraintes de succession,
    - contraintes temporelles.

5.  Procédé selon la revendication 1, dans lequel l'arrêt de la détermination du cas de test est déterminé à partir d'une formule faisant intervenir les critères assortis d'une pondération.

6.  Procédé selon la revendication 5, dans lequel l'arrêt de la détermination est précédé d'une étape de validation de chaque ligne de test au regard de cette formule, chaque étape de test étant retenue si elle entraîne une évolution favorable du résultat de la formule.

7.  Procédé selon la revendication 6, dans lequel l'arrêt de la détermination est précédé d'une étape de validation de chaque ligne de test, dans laquelle il est vérifié si la valeur d'entrée testée a déjà été testée dans une ligne de test précédente.

8.  Procédé selon la revendication 1, comprenant une étape de configuration permettant à un utilisateur de définir les seuils des critères d'arrêt de la détermination.

**Patentansprüche**

1. Verfahren zum automatischen Erstellen von Testfällen mittels eines Rechners zum Verifizieren mindestens einer Funktionalität einer Software in Bezug auf ein Pflichtenheft, das Spezifikationen umfasst, die Eingangswerte und Ausgangswerte der Software in Beziehung setzt, wobei das Verfahren die Schritte umfasst:

   - Unterscheiden von kombinatorischen Spezifikationen und sequentiellen Spezifikationen,
   - Modellieren der kombinatorischen Spezifikationen beispielsweise durch eine Wahrheitstabelle und der sequentiellen Spezifikationen beispielsweise durch einen endlichen Automaten, um ein modelliertes Pflichtenheft zu erhalten,
   - Erstellen einer Operationsmatrix, die die Eingangswerte mit einer Wahrscheinlichkeit ihrer Verkettung und einer Übergangszeit zwischen denselben in Beziehung setzt,
   - Auswählen der Verkettungen von zu testenden Eingangswerten, indem eine Monte-Carlo-Ziehung in der Operationsmatrix durchgeführt wird,
   - Bestimmen eines Testfalls, der Testreihen umfasst, die jede ausgewählte Verkettung mit Ausgangswerten in Beziehung setzt, die gemäß dem modellierten Pflichtenheft erwartet werden,
   - Stoppen der Bestimmung, wenn der Testfall während der Bestimmung das Erreichen eines vorgegebenen Schwellwertes für mindestens eines der folgenden Kriterien ermöglicht: verifizierter Prozentsatz des Funktionalitätcodes, verifizierter Prozentsatz der Spezifikationen, Verifikationszeit und Verifikationskosten.

2. Verfahren nach Anspruch 1, bei dem die Erstellung der Operationsmatrix die Phase des Durchführens einer statistischen Analyse der Daten einer Softwarefehler-Datenbank im Hinblick auf die zu verifizierende Funktionalität umfasst, um die Auftrittshäufigkeit der Verkettungen von Eingangswerten in einem Prozess des Auftretens von bekannten Fehlern der Funktionalität zu identifizieren.

3. Verfahren nach Anspruch 1, bei dem die Erstellung der Operationsmatrix die Phase des Durchführens einer statistischen Analyse der Daten einer Datenbank von vergangenen Testfällen in Bezug auf die zu verifizierende Funktionalität umfasst, um die Verifikationshäufigkeit jeder Verkettung von Eingangswerten in den vergangenen Testfällen zu identifizieren.

4. Verfahren nach Anspruch 1, bei dem die Erstellung der Operationsmatrix die Phase des Bestimmens eines Nutzerprofils der zu verifizierenden Funktionalität umfasst, das für jede Verkettung der Eingangswerte mindestens eine der folgenden Beschränkungsarten identifiziert, die auf die Verkettung der Eingangswerte ausgeübt werden:

   - logische Beschränkungen,
   - konditionale Beschränkungen,
   - Abfolgebeschränkungen,
   - zeitliche Beschränkungen.

5. Verfahren nach Anspruch 1, bei dem das Stoppen der Bestimmung des Testfalls anhand einer Formel bestimmt wird, die gewichtete Kriterien einsetzt.

6. Verfahren nach Anspruch 5, bei dem dem Stoppen der Bestimmung ein Schritt der Validierung jeder Testreihe in Bezug auf diese Formel vorausgeht, wobei jeder Testschritt beibehalten wird, wenn er eine günstige Entwicklung des Ergebnisses der Formel bewirkt.

7. Verfahren nach Anspruch 6, bei dem dem Stoppen der Bestimmung ein Schritt der Validierung jeder Testreihe vorausgeht, bei dem verifiziert wird, ob der getestete Eingangswert bereits in einer vorhergehenden Testreihe getestet wurde.

8. Verfahren nach Anspruch 1, umfassend einen Konfigurationsschritt, der dem Nutzer ermöglicht, die Schwellwerte der Stoppkriterien zum Stoppen der Bestimmung zu definieren.

**Claims**

1. A method of automatic formulation by a computer of test cases for verifying at least one function of a piece of software in relation to a specification including requirements relating input values and output values of the software, the method including the steps of:

- distinguishing combinatorial requirements and sequential requirements;
- modeling combinatorial requirements by a truth table and sequential requirements by a finite state machine to obtain a modeled specification;
- establishing an operation matrix relating the input values of the software with a probability of them being in succession and a transition time between them;
- selecting the successions of input values to be tested by performing a Monte Carlo draw on the operation matrix;
- determining a test case including test rows relating each selected succession with the output values expected given the modeled specification;
- stopping the determination process when the test case being determined makes it possible to reach a predetermined threshold for at least one of the following criteria: verified percentage of function code, verified percentage of requirements, verification time, and verification cost.

2. A method according to claim 1, wherein establishing the operation matrix includes a stage of effecting a statistical analysis of data from a database of software bugs relating to the function to be verified in order to identify the frequency of occurrence of successions of input values in a process of known bugs of the function appearing.

3. A method according to claim 1, wherein establishing the operation matrix includes a stage of effecting a statistical analysis of data from a database of past test cases relating to the function to be verified in order to identify the frequency of verification of each succession of input values in past test cases.

4. A method according to claim 1, wherein the formulation of the operation matrix includes a stage of determining a user profile for the function to be verified identifying, for each succession of input values, at least one of the following types of constraint on the succession of input values:

- logical constraints;
- conditional constraints;
- succession constraints;
- timing constraints.

5. A method according to claim 1, wherein stopping the process of determining the test case is determined on the basis of a formula involving weighted criteria.

6. A method according to claim 5, wherein stopping the determination process is preceded by a step of validating each test row against said formula, each test step being retained if it leads to favorable evolution of the result of the formula.

7. A method according to claim 6, wherein stopping the determination process is preceded by a step of validating each test row, which step verifies whether the tested input value has already been tested in a preceding test row.

8. A method according to claim 1, including a configuration step enabling a user to define thresholds of criteria for deciding when to stop the determination process.

FIG. 1

FIG. 2

EP 2 286 339 B1

FIG. 3

## Operations equi-probables (Nominal 1)

| Signaux d'entrée | Domaines | I1 | | I2 | | | I3 | |
|---|---|---|---|---|---|---|---|---|
| | | 0 | 1 | 1 | 2 | 3 | 0 | 1 |
| I1 | 0 | {0,14; [X;Y]} | {0,14; [X;Y]} | {0,14; [X;Y]} | {0,14; [X;Y]} | {0,14; [X;Y]} | {0,14; [X;Y]} | {0,14; [X;Y]} |
| | 1 | {0,14; [X;Y]} | {0,14; [X;Y]} | {0,14; [X;Y]} | {0,14; [X;Y]} | {0,14; [X;Y]} | {0,14; [X;Y]} | {0,14; [X;Y]} |
| I2 | 1 | {0,14; [X;Y]} | {0,14; [X;Y]} | {0,14; [X;Y]} | {0,14; [X;Y]} | {0,14; [X;Y]} | {0,14; [X;Y]} | {0,14; [X;Y]} |
| | 2 | {0,14; [X;Y]} | {0,14; [X;Y]} | {0,14; [X;Y]} | {0,14; [X;Y]} | {0,14; [X;Y]} | {0,14; [X;Y]} | {0,14; [X;Y]} |
| | 3 | {0,14; [X;Y]} | {0,14; [X;Y]} | {0,14; [X;Y]} | {0,14; [X;Y]} | {0,14; [X;Y]} | {0,14; [X;Y]} | {0,14; [X;Y]} |
| I3 | 0 | {0,14; [X;Y]} | {0,14; [X;Y]} | {0,14; [X;Y]} | {0,14; [X;Y]} | {0,14; [X;Y]} | {0,14; [X;Y]} | {0,14; [X;Y]} |
| | 1 | {0,14; [X;Y]} | {0,14; [X;Y]} | {0,14; [X;Y]} | {0,14; [X;Y]} | {0,14; [X;Y]} | {0,14; [X;Y]} | {0,14; [X;Y]} |

**FIG. 4**

*Probabilité d'enchaînement, intervalle de temps*

## Signaux equi-probables (Nominal 2)

| Signaux d'entrée | Domaines | I1 | | I2 | | | I3 | |
|---|---|---|---|---|---|---|---|---|
| | | 0 | 1 | 1 | 2 | 3 | 0 | 1 |
| I1 | 0 | {0,17; [X;Y]} | {0,17; [X;Y]} | {0,11; [X;Y]} | {0,11; [X;Y]} | {0,11; [X;Y]} | {0,17; [X;Y]} | {0,17; [X;Y]} |
| | 1 | {0,17; [X;Y]} | {0,17; [X;Y]} | {0,11; [X;Y]} | {0,11; [X;Y]} | {0,11; [X;Y]} | {0,17; [X;Y]} | {0,17; [X;Y]} |
| I2 | 1 | {0,17; [X;Y]} | {0,17; [X;Y]} | {0,11; [X;Y]} | {0,11; [X;Y]} | {0,11; [X;Y]} | {0,17; [X;Y]} | {0,17; [X;Y]} |
| | 2 | {0,17; [X;Y]} | {0,17; [X;Y]} | {0,11; [X;Y]} | {0,11; [X;Y]} | {0,11; [X;Y]} | {0,17; [X;Y]} | {0,17; [X;Y]} |
| | 3 | {0,17; [X;Y]} | {0,17; [X;Y]} | {0,11; [X;Y]} | {0,11; [X;Y]} | {0,11; [X;Y]} | {0,17; [X;Y]} | {0,17; [X;Y]} |
| I3 | 0 | {0,17; [X;Y]} | {0,17; [X;Y]} | {0,11; [X;Y]} | {0,11; [X;Y]} | {0,11; [X;Y]} | {0,17; [X;Y]} | {0,17; [X;Y]} |
| | 1 | {0,17; [X;Y]} | {0,17; [X;Y]} | {0,11; [X;Y]} | {0,11; [X;Y]} | {0,11; [X;Y]} | {0,17; [X;Y]} | {0,17; [X;Y]} |

**FIG. 5**

*Probabilité d'enchaînement, intervalle de temps*

0.17+0.17 = **0.33**     0.11+0.11+0.11 = **0.33**     0.17+0.17 = **0.33**

EP 2 286 339 B1

Contraintes sur les valeurs d'entrée :

Contraintes logiques

Contraintes conditionnelles

Contraintes de succession

Contraintes temporelles

$\{0, 1\}$ —I1→ 

$\{1, 2, 3\}$ —I2→ Fonctionnalité logicielle en test

$\{0, 1\}$ —I3→ 

...

**Génération automatique**

**Profil utilisateur "matrice opérationnelle"**

## FIG. 6

| Cas de test | | |
|---|---|---|
| Etape n° | Actions test | Résultats attendus |
| 1 | I1 = 1 / 250 ms | O1 = 0 / O2 = 1 |
| 2 | I2 = 2 / 200 ms | O1 = 0 / O2 = 1 |
| 3 | I3 = 1 / 300 ms | O1 = 1 / O2 = 1 |
| 4 | I2 = 1 / 250 ms | O1 = 0 / O2 = 1 |
| 5 | I2 = 3 / 900 ms | O1 = 0 / O2 = 0 |
| 6 | I1 = 0 / 200 ms | O1 = 0 / O2 = 1 |
| 7 | I3 = 1 / 400 ms | O1 = 0 / O2 = 1 |
| 8 | I2 = 3 / 200 ms | O1 = 1 / O2 = 1 |
| 9 | I1 = 1 / 100 ms | O1 = 0 / O2 = 1 |
| 10 | I2 = 1 / 150 ms | O1 = 0 / O2 = 0 |
| 11 | I2 = 3 / 500 ms | O1 = 0 / O2 = 1 |
| 12 | I1 = 1 / 100 ms | O1 = 1 / O2 = 1 |
| 13 | I3 = 1 / 350 ms | O1 = 0 / O2 = 1 |
| 14 | I2 = 2 / 700 ms | O1 = 0 / O2 = 0 |
| 15 | I1 = 0 / 100 ms | O1 = 0 / O2 = 1 |
| 16 | I3 = 0 / 200 ms | O1 = 0 / O2 = 0 |
| 17 | I1 = 0 | O1 = 0 |

**Génération automatique**

## Cas de test "matrice opérationnelle"

| | | I1 | | I2 | | | I3 | |
|---|---|---|---|---|---|---|---|---|
| | | 0 | 1 | 1 | 2 | 3 | 0 | 1 |
| I1 | 0 | 0 | 0 | 0 | 0 | 0 | 0,5 [100,100] | 0,5 [200,200] |
| | 1 | 0 | 0 | 0,33 [100,100] | 0,33 [250,250] | 0 | 0 | 0,33 [100,100] |
| I2 | 1 | 0 | 0 | 0 | 0 | 1 [150,250] | 0 | 0 |
| | 2 | 0,5 [700,700] | 0 | 0 | 0 | 0 | 0 | 0,5 [200,200] |
| | 3 | 0,33 [900,900] | 0,66 [200,500] | 0 | 0 | 0 | 0 | 0 |
| I3 | 0 | 1 [200,200] | 0 | 0 | 0 | 0 | 0 | 0 |
| | 1 | 0 | 0 | 0,33 [300,300] | 0,33 [350,350] | 0,33 [400,400] | 0 | 0 |

## FIG. 7

EP 2 286 339 B1

# Problèmes capitalisés

| Valeurs initiales d'entrée | I1=1<br>I2=1<br>I3=0 |
|---|---|
| **Etape 1** | |
| Prémière opération | I1=0 |
| Temps inter-operationnel (ms) | 50 |
| Valeurs de sortie attendues | O1=0; O2=0 |
| Valeurs de sorties observées | O1=0; O2=0 |
| **Etape 2** | |
| 2 ieme opération | I1=1 |
| Temps inter-operationnel (ms) | 200 |
| Valeurs de sortie attendues | O1=0; O2=0 |
| Valeurs de sorties observées | O1=0; O2=0 |
| **Etape 3** | |
| 3 ieme opération | I2=2 |
| Temps inter-operationnel (ms) | 100 |
| Valeurs de sortie attendues | O1=1; O2=0 |
| Valeurs de sorties observées | O1=1; O2=0 |
| **Etape 4** | |
| 4 ieme opération | I3=1 |
| Temps inter-operationnel (ms) | 800 |
| Valeurs de sortie attendues | O1=1; O2=1 |
| Valeurs de sorties observées | O1=1; O2=1 |
| **Etape 5** | |
| 5 ieme opération | I1=0 |
| Temps inter-operationnel (ms) | 200 |
| Valeurs de sortie attendues | O1=0; O2=1 |
| Valeurs de sorties observées | O1=0; O2=1 |
| **Etape 6** | |
| 6 ieme opération | I1=1 |
| Temps inter-operationnel (ms) | 300 |
| Valeurs de sortie attendues | O1=1; O2=1 |
| Observed values on outputs | O1=1; O2=1 |
| **Etape 7** | |
| 7 ieme opération | I3=0 |
| Temps inter-operationnel (ms) | 150 |
| Valeurs de sortie attendues | O1=1; O2=0 |
| Valeurs de sorties observées | O1=1; O2=1 |

**ERREUR**

**Génération automatique**

# Défauts de logiciels "Matrice opérationnelle"

| | | I1 | | I2 | | | I3 | |
|---|---|---|---|---|---|---|---|---|
| | | 0 | 1 | 1 | 2 | 3 | 0 | 1 |
| I1 | 0 | 0 | 1<br>[50,200] | 0 | 0 | 0 | 0 | 0 |
| | 1 | 0 | 0 | 0 | 0,5<br>[200,200] | 0 | 0,5<br>[300,300] | 0 |
| I2 | 1 | 0 | 0 | 0 | 0 | 0 | 0 | 0 |
| | 2 | 0 | 0 | 0 | 0 | 0 | 0 | 1<br>[100,100] |
| | 3 | 0 | 0 | 0 | 0 | 0 | 0 | 0 |
| I3 | 0 | 0 | 0 | 0 | 0 | 0 | 0 | 0 |
| | 1 | 1<br>[800,800] | 0 | 0 | 0 | 0 | 0 | 0 |

**FIG. 8**

EP 2 286 339 B1

EP 2 286 339 B1

I1=0
{0,1}

I2=1
{1,2,3}

I3=0
{0,1}

Modèle de logiciels fonctionnels requis

O1=0

O2≦ 0

I1=1
{0,1}

I2=1
{1,2,3}

I3=0
{0,1}

Modèle de logiciels fonctionnels requis

O1=0

O2≦ 1

**Début**

**Activitée 1**
Simulation Monte Carlo sur une "Matrice opérationnelle"

**Activitée 2**
Simulation du modèle requis

Satisfait Arret critère

*No*

*Yes*

**Fin**

| Cas de test | | |
|---|---|---|
| Etape de test | Actions test | Résultats attendus |

| Cas de test | | |
|---|---|---|
| Etape de test | Actions test | Résultats attendus |
| 1 | I1 = 1 Wait 250 ms | |

| Cas de test | | |
|---|---|---|
| Etape de test | Actions test | Résultats attendus |
| 1 | I1 = 1 Wait 250 ms | O1=0 O2=1 |

FIG. 9

# Objectifs et contraintes des générations de test

Targets    Weights

Structural (code) Coverage Objectives

Code
- Code statements Coverage
- Code procedures Coverage
- Code conditions Coverage
- Code decisions Coverage

Functional (specification) Coverage Objectives

Signals domains coverage
- Inputs domains Coverage
- Outputs domains Coverage
- Intermediates domains Coverage
- Inputs boundaries Coverage
- Outputs boundaries Coverage
- Intermediates boundaries Coverage

Operation matrix coverage
- Successive 2-Operations Coverage
- Critical successive 2-Operations Coverage

Elements coverage
- DT Condition Coverage
- FSM State Coverage
- FSM Transition Coverage
- FSM Condition Coverage
- DT Critical Condition Coverage
- FSM Critical State Coverage
- FSM Critical Transition Coverage
- FSM Critical Condition Coverage

Test Simulation Time and Cost Const

Temps et coût des contraintes
- Test Case Simulation Time (x1)    ms    108000    10
- Test Step Number    0    0
- Distinct Test Step Number    0    0

Objectifs ($O_{objectif}$)

Poids ($w_i$)

Contraintes ($C_{objectif}$)

$$F = \sum \left| O_{Objectif} - O_{Courant} \right| \times w_i + \sum \left| C_{Objectif} - C_{Courant} \right| \times w_i$$

$\underbrace{\qquad\qquad\qquad}_{F_{objectifs}}$    $\underbrace{\qquad\qquad\qquad}_{F_{contraintes}}$

FIG. 10

EP 2 286 339 B1

**EP 2 286 339 B1**

## RÉFÉRENCES CITÉES DANS LA DESCRIPTION

**Documents brevets cités dans la description**

- WO 2006007588 A